# DEMANDE DE BREVET EUROPEEN

(11) **EP 0 927 881 A1**
(43) Date de publication de la demande: **07.07.1999**
(21) Numéro de dépôt: 98440001.0
(22) Date de dépôt: 02.01.1998
(51) Int. Cl.: G01N 21/31

(54) **Appareil analyseur de mercure**

(71) Demandeur: Carrare (Sté à responsabilité limitée), 67000 Strasbourg (FR)
(72) Inventeur: Coffin, Stéphane, 67000 Strasbourg (FR); Livardjani, Fariborz, 67005 Strasbourg (FR); Ruhl, Eric, 67203 Oberschaeffolsheim (FR)
(74) Mandataire: Littolff, Denis

(57) **Abrégé**

Appareil analyseur de mercure fonctionnant par absorption atomique en vapeur froide, et comportant à cet effet un circuit parcouru par un gaz vecteur, qui peut être, en phase de mesure, soit directement chargé d'atomes de mercure dans un échantillon gazeux, soit acheminé à travers un élément (9) dudit circuit comportant l'échantillon à mesurer, dans lequel s'effectue le transfert des atomes de mercure du milieu original vers ledit gaz vecteur, lequel est ensuite dirigé vers une cellule de mesure (24) incluse dans un dispositif de mesure faisant office de chambre noire (17) dotée d'un émetteur de lumière (21) à vapeur de mercure envoyant un faisceau lumineux dans ladite cellule (24), et d'un organe de mesure (28) convertissant le signal lumineux issu de la cellule (24) en un signal électrique traité par une unité de traitement électronique (11),
caractérisé en ce que le dispositif de mesure (17) comprend une seconde cellule de référence (25) de configuration identique à la cellule de mesure (24), non parcourue par le gaz vecteur, mais également placée sur le trajet d'un faisceau lumineux émis par l'émetteur de lumière (21) à vapeur de mercure, en sortie de laquelle se trouve un organe de mesure (29) identique à celui qui se trouve en sortie de la cellule de mesure (24), convertissant le signal lumineux issu de la cellule de référence (25) en un signal électrique traité par l'unité de traitement électronique (11) disposant ainsi d'un signal de référence.

## Description

La présente invention concerne un analyseur de mercure fonctionnant selon le principe de l'absorption atomique en vapeur froide, et pouvant mesurer le taux de mercure dans des gaz et dans des liquides, ainsi que dans des solides après une étape de minéralisation.

Compte tenu de l'intérêt croissant que porte le monde d'aujourd'hui à l'environnement, et notamment à la connaissance de la composition du milieu ambiant, des appareils de détection d'éléments supposés dangereux ont déjà été proposés depuis quelques années.

Ainsi, pour ce qui concerne la détection du mercure, le brevet français déposé le 25 Juillet 1991 sous le numéro FR 91 09630 et publié le 29 Mars 1993 sous le numéro FR-A-2 679 656, propose un appareil de dosage du mercure contenu notamment dans un échantillon d'air ou d'eau.

Cet appareil, également basé sur une méthode d'absorption atomique sans flamme dite méthode de HATCH et OTT, décrit une alternative aux procédés utilisés jusqu'alors, consistant à piéger le mercure contenu dans l'air sur des charbons actifs, puis à traiter ces charbons chimiquement pour obtenir une minéralisation en vue de la libération du mercure sous forme métallique.

Ces anciens procédés sont cependant longs à mettre en oeuvre (le piégeage de l'air contenant le mercure nécessite une durée d'exposition assez importante) et peu pratiques car ils nécessitent un matériel approprié spécialisé et plusieurs phases distinctes de traitement. Un tel procédé est manifestement du domaine de spécialistes, et ne s'avère au surplus pas toujours fiable car certaines étapes comportent une part d'incertitude qui obère le résultat des autres.

L'appareil décrit dans le brevet FR-A-2 679 656 a considérablement simplifié le dosage du mercure en proposant une lecture directe du mercure contenu dans l'échantillon, sans recourir à des étapes externes comme c'était le cas jusqu'alors. Plus précisément, ledit échantillon, après passage dans un flacon laveur contenant un réactif approprié, est dirigé au moyen d'un gaz vecteur vers une cellule de mesure dans laquelle la lumière émise par une lampe à cathode creuse est partiellement absorbée par les atomes de mercure véhiculés par le gaz vecteur.

Le signal lumineux, altéré par cette absorption, est envoyée vers un phototube dans lequel il est converti en un signal électrique dépendant de ladite absorption, et donc de la quantité de mercure véhiculé. Le signal électrique est ensuite traité par un dispositif électronique, notamment par comparaison avec des courbes d'étalonnage préalablement enregistrées. Le résultat est immédiatement envoyé vers un afficheur, l'utilisateur disposant ainsi d'une mesure quasi instantanée.

L'échantillon est injecté dans le flacon laveur via un site d'injection dans lequel est introduite une seringue ou une micropipette ayant servi à réaliser le prélèvement liquide ou gazeux. La chambre de mesure proprement dite comporte des moyens mécaniques de réglage de la position optimale des organes de mesure lampe/cellule/phototube l'un relativement à l'autre.

Alors que l'un des avantages de cet appareil réside dans le faible encombrement permettant un déplacement vers les sites d'examen, le même déposant a également déposé un certificat d'addition au brevet FR-A-2 679 656, en date du 20 Mai 1992, portant le numéro FR 92 06595 et publié le 3 Décembre 1993 sous le numéro FR-A-2 691 804, concernant un appareil fixé à demeure dans un site surveillé.

L'air, prélevé à l'aide d'un tube de prélèvement par une pompe d'entrée, est envoyé vers un flacon laveur à réactif dans lequel les atomes de mercure sont libérés, l'air servant alors de vecteur étant envoyé par une seconde pompe vers une cellule de mesure avant d'être expulsé après passage sur un filtre à charbon destiné à le purifier.

Ce second appareil est bien entendu de dimensions supérieures au premier, la miniaturisation à des fins de transportabilité n'étant pas un objectif en l'occurrence.

Le premier décrit, imposant une seringue d'injection d'échantillon gazeux encombrante, un réglage précis des différents éléments de la chambre de mesure, une solution liquide particulière même pour la mesure du mercure dans l'air, se présente plus comme un prototype que comme un appareil grand public utilisable par tous sans réglages ni connaissances particulières.

En particulier, le compartiment de mesure, pouvant nécessiter des ajustements sur sites et un réétalonnage fréquent, implique quasi nécessairement que l'utilisateur soit un scientifique versé dans ce domaine technique.

Le second appareil, décrit dans le document FR-A-2 691 804, souffre des mêmes limitations, et n'est de toute manière pas adapté pour être utilisé dans une gamme étendue d'activités ou d'applications, du fait de sa conception et de son encombrement.

Il s'agit au contraire d'un des objectifs essentiels de la présente invention.

A cet effet, l'appareil proposé dans le cadre de l'invention est immédiatement utilisable, et procure en outre un résultat instantané de la teneur de l'échantillon en mercure sans étalonnage préalable dans l'air, ni de manipulations ou de réglages compliqués.

Sa simplicité et sa fiabilité permettent une utilisation ne nécessitant en outre aucune formation particulière, puisqu'elle ne comprend aucune opération autre que l'activation de l'appareil dans le cas de la mesure du mercure dans l'air, et une simple injection de liquide pour la mesure en phase liquide. Son emploi est donc à la portée de tous.

L'appareil objet de la présente invention est en outre compact et léger, et à ce titre facilement déplaçable.

Il peut être relié à n'importe quel micro-ordinateur disponible sur le marché, mais peut également fonctionner d'une façon totalement autonome, notamment sur batterie, des périphériques usuels de commande et de visualisation pouvant y être intégrés à cet effet.

Selon un autre objectif de l'invention, tous les éléments du circuit de mesure ont été optimisés dans un souci d'efficacité et pour accroître la fiabilité de la mesure, et également de sorte que l'ensemble des réglages de l'appareil soient automatisés afin de le prévenir contre toute manipulation intempestive.

Des dispositifs de sécurité permettent enfin d'anticiper tout problème de fonctionnement, et d'éviter à l'utilisateur une intervention directe sur l'appareil.

Plus précisément, l'invention concerne un appareil analyseur de mercure, fonctionnant par absorption atomique en vapeur froide, et comportant à cet effet un circuit parcouru par un gaz vecteur, qui peut être, en phase de mesure, soit directement chargé d'atomes de mercure d'un échantillon gazeux, soit acheminé à travers un élément dudit circuit comportant l'échantillon à mesurer, et dans lequel s'effectue le transfert des atomes de mercure du milieu original vers ledit gaz vecteur, lequel est ensuite dirigé vers une cellule de mesure incluse dans un dispositif de mesure faisant office de chambre noire dotée d'un émetteur de lumière à vapeur de mercure envoyant un faisceau lumineux dans ladite cellule, et d'un organe de mesure convertissant le signal lumineux issu de la cellule en un signal électrique traité par une unité de traitement électronique, caractérisé en ce que le dispositif de mesure comprend une seconde cellule de référence de configuration identique à la cellule de mesure, non parcourue par le gaz vecteur, mais également placée sur le trajet d'un faisceau lumineux émis par l'émetteur de lumière à vapeur de mercure, en sortie de laquelle se trouve un organe de mesure identique à celui qui se trouve en sortie de la cellule de mesure, convertissant le signal lumineux issu de la cellule de référence en un signal électrique traité par l'unité de traitement électronique disposant ainsi d'un signal de référence.

Le coeur de l'appareil comprend donc un système de référence variable en fonction des conditions, compensant en particulier les effets de dérive de l'émetteur de lumière UV en temps réel. Il n'y a donc pas d'incertitudes de mesure provoquées par une telle dérive lorsqu'on effectue des mesures séquentielles, comme c'était par exemple le cas dans l'art antérieur.

La mesure du taux de mercure résulte en outre directement de la comparaison entre les valeurs données respectivement par le trajet de référence et le trajet de mesure de la lumière UV. Il ne s'agit donc plus d'un calcul de type absolu, mais d'un calcul de nature différentielle, beaucoup plus fiable car intégrant par définition les variations s'appliquant simultanément aux deux trajets, variations qui ne peuvent être prises en compte si l'étalonnage et la mesure sont séquentielles.

L'invention s'applique également, à titre principal, au circuit de gaz véhiculant à l'extérieur de la chambre noire l'échantillon gazeux porteur de mercure ou l'air vecteur des atomes de mercure arrachés au liquide du flacon laveur. Une optimisation systématique en a été entreprise dans le cadre de l'invention.

Ainsi, ce circuit parcouru par le gaz vecteur comprend deux branches parallèles situées en amont d'un flacon laveur, l'une des branches étant destinée au passage de l'échantillon de gaz porteur de mercure à mesurer, l'autre branche étant prévue pour le passage de l'air filtré et dépourvu de mercure, et disposant à cet effet de moyens de filtrage du mercure, lesdites branches partageant deux électrovannes en série pouvant commuter pour être reliées alternativement à l'une et à l'autre.

Le jeu de ces électrovannes permet d'aboutir à plusieurs trajets possibles de l'air, ou plus généralement du gaz, correspondant notamment à plusieurs fonctions distinctes : transport d'un échantillon à mesurer, purge du circuit de toute trace de mercure, pré-aspiration d'un échantillon sans effet de volume mort, etc...

La branche prévue pour véhiculer l'air dépourvu de mercure comporte, de part et d'autre des électrovannes en série, un charbon actif capable de fixer le mercure, en opérant ainsi un filtrage.

En continuant l'examen du circuit, le flacon laveur est situé en aval d'une troisième électrovanne permettant de commuter le circuit gazeux entre d'une part la sortie desdites branches en parallèle, et d'autre part un réservoir à liquide permettant d'alimenter le flacon laveur lorsque le niveau en liquide y baisse.

L'alimentation en liquide dudit flacon est automatisée, comme on le verra plus en détail dans la suite. Lorsque le niveau de liquide baisse, l'électrovanne commute et connecte le réservoir au flacon laveur, selon des cycles cependant très ponctuels. Dans la plupart des cas, ladite vanne reste dans sa position de mesure, reliant l'entrée bifide du circuit au flacon laveur.

Comme on l'a mentionné auparavant, l'appareil de l'invention fonctionne avec des échantillons gazeux ou avec des échantillons liquides, lesquels ont fait l'objet d'un traitement préalable de minéralisation et de filtration classique, notamment pour la mesure du mercure dans un solide, et sont immergés dans une solution acide réductrice contenue dans le flacon laveur.

Lors de la mesure de la teneur en mercure d'un gaz, en général de l'air, le flacon laveur contient de l'eau, qui a pour fonction d'humidifier l'air à un taux constant, ce qui rend la mesure indépendante du taux d'humidité de l'air prélevé.

Lors de la mesure du mercure dans une phase liquide, il faut transférer les atomes de mercure de la phase liquide à la phase gazeuse, et le flacon laveur est configuré pour répondre à ce besoin.

Ainsi, il comporte une entrée immergée dans le liquide donnant sur un filtre en verre fritté s'ajustant dans le volume intérieur du flacon, uniformisant et accroissant le contact gaz/solution.

En effet, l'immersion de la pastille en verre frittée dans la solution réductrice, sur le trajet du gaz, permet une répartition uniforme des bulles dans ladite solution. Les bulles sont au surplus beaucoup plus nombreuses et, bien que de surface individuelle plus réduite, elles totalisent une surface de contact liquide/air bien plus importante.

La solution d'acides libère le mercure sous sa forme atomique gazeuse et retient d'autres éléments, tels que l'ozone, susceptibles d'interférer avec la mesure.

De préférence, dans le circuit gazeux de l'invention, entre le flacon laveur et l'entrée de la cellule de mesure, se trouve un flacon de garde retenant tout liquide s'échappant du flacon laveur en direction de ladite cellule de mesure.

Ce flacon piège notamment les gouttelettes s'échappant du flacon laveur et se dirigeant vers la cellule de mesure.

L'apparition d'eau dans la cellule de mesure aboutirait en effet à fausser la mesure, et doit donc être systématiquement empêchée.

Selon une possibilité, lesdits flacons laveur et de garde sont équipés d'au moins un détecteur de niveau d'eau.

Dans le cas du flacon laveur, un détecteur indique un niveau suffisant de liquide, et permet notamment à l'unité électronique de piloter la commutation de la vanne en amont, afin que le réservoir soit relié directement au flacon et l'alimente.

Pour une mesure du mercure dans l'air, on peut envisager de se passer de flacon de garde : deux détecteurs sont alors prévus à des niveaux différents, le plus haut réalisant une sécurité visant à empêcher l'eau de s'échapper vers la cellule de mesure, alors que le plus bas détecte simplement le niveau de remplissage comme dans l'hypothèse précédente. Les conduits d'entrée/sortie de gaz dans le flacon laveur sont alors au-dessus de la surface de l'eau.

S'il y a néanmoins un flacon de garde, le détecteur de sécurité est alors affecté à ce flacon, chacun étant donc muni d'un unique détecteur. Il détecte à nouveau le seuil critique au-delà duquel l'eau risque de passer dans la cellule de mesure, mais depuis le flacon de garde. Il fait office de sécurité antidébordement, comme indiqué auparavant, en signalant le cas échéant à l'unité électronique de couper la pompe du circuit.

De préférence, chaque détecteur de niveau d'eau fonctionne selon un principe optique, au moyen d'une diode électroluminescente envoyant un faisceau lumineux en direction d'une photodiode lorsqu'il n'y a pas de liquide entre ces deux composants, le faisceau étant dévié par diffraction lorsque le niveau de liquide atteint ou dépasse ledit faisceau. La photodiode émet à l'adresse de l'unité de traitement électronique un signal d'allure binaire selon qu'elle reçoit ou non le faisceau lumineux.

Le circuit gazeux comporte en outre une pompe et un débitmètre, ladite pompe étant située en sortie du circuit.

Cette position s'explique par la nécessité d'éviter toute contamination de l'échantillon gazeux à mesurer. Son débit se situe en principe entre 0 et 2 litres par minute, et peut être réglé par l'unité électronique de traitement suivant les instructions fournies par l'utilisateur.

La chambre de mesure est de préférence blindée contre les perturbations électromagnétiques, et elle est divisée en trois compartiments.

Le compartiment central comprend les cellules de référence et de mesure. Elles reçoivent les faisceaux lumineux UV émis par la lampe à vapeur de mercure via deux miroirs réfléchissant de façon identique la lumière UV émise par ladite lampe, située dans un compartiment latéral.

Un filtre UV est par ailleurs placé entre la sortie des cellules et les organes de mesure, dans l'autre compartiment latéral. Il est du type interférentiel, et laisse passer les longueurs d'onde centrées sur 253,7 nm, avec une bande passante de 10 nm.

Les organes de mesure sont préférentiellement des photodiodes en silicium fonctionnant optimalement pour des rayons lumineux UV.

Pour éviter les perturbations de mesure dues à la présence d'eau au niveau de la cellule de mesure, la surface périphérique de celle-ci est uniformément chauffée pour éviter toute condensation de vapeur d'eau sur sa paroi.

Selon une possibilité, le chauffage de la cellule de mesure est réalisé par un fil résistif enroulé autour de la cellule et alimenté en basse tension réglable.

Alternativement, il est réalisé à l'aide d'un polymère conducteur appliqué sur la surface externe de ladite cellule, également alimenté en basse tension réglable.

La cellule de mesure peut être en outre munie d'un capteur de température mesurant sa température et en permettant la régulation par asservissement de l'alimentation des moyens de chauffage au signal du capteur, via l'unité de traitement électronique.

La cellule de référence, soumise à des conditions strictement identiques à celles qui sont appliquées à la cellule de mesure, ne nécessite pas de chauffage puisqu'elle n'est pas parcourue par un gaz susceptible d'entraîner de la condensation.

Elle est formée d'un tube, de préférence en matériau connu sous la marque Pyrex ou équivalent, et peut être fermée à ses deux extrémités axiales par des fenêtre en quartz, notamment lors de l'utilisation dans un environnement fortement pollué en mercure.

Lorsqu'elle est munie de fenêtres bouchant ses extrémités, elle est remplie d'un gaz interne pouvant être de l'air sec ou de l'azote.

La cellule de mesure comporte également des fenêtres en quartz aux deux extrémités du tube en Pyrex identique à celui de la cellule de référence, et des conduits d'entrée et de sortie pour le gaz vecteur.

Les signaux délivrés par les photodiodes de l'étage de mesure sont envoyés à l'unité de traitement électronique, qui gère comme on l'a vu d'autres signaux issus des détecteurs de niveaux, du capteur de température, du débitmètre, etc...

En particulier, elle comporte un étage de numérisation des signaux issus des photodiodes situé à proximité desdites photodiodes, afin de minimiser les risques de perturbations électriques.

L'unité centrale électronique comporte un microprocesseur qui rend l'appareil autonome, qu'il soit alimenté par le secteur ou par une batterie. Dans sa version simplifiée, le microprocesseur peut n'avoir comme périphérique destiné à l'utilisateur qu'un simple afficheur. Mais il peut alternativement comporter un micro-ordinateur complet, avec clavier ou écran tactile, périphérique de stockage d'information, etc..., c'est à dire les périphériques usuels d'utilisation d'un micro-ordinateur.

L'appareil de l'invention peut aussi comporter un port de sortie permettant une liaison avec un micro-ordinateur classique doté d'un logiciel d'exploitation des mesures de l'analyseur de mercure.

L'invention va à présent être décrite plus en détail, au moyen des figures annexées pour lesquelles :
- la figure 1 est un schéma de l'ensemble du circuit ;
- les figures 2 et 3 montrent le fonctionnement des détecteurs de niveau ;
- les figures 4 à 6 indiquent les commutations des électrovannes lors d'une mesure du mercure dans une phase gazeuse ;
- les figures 7a, 7b et 8 proposent trois versions du flacon laveur, respectivement utilisées pour une mesure du mercure dans une phase gazeuse et dans une phase liquide ; et
- la figure 9 schématise un charbon actif filtrant le mercure.

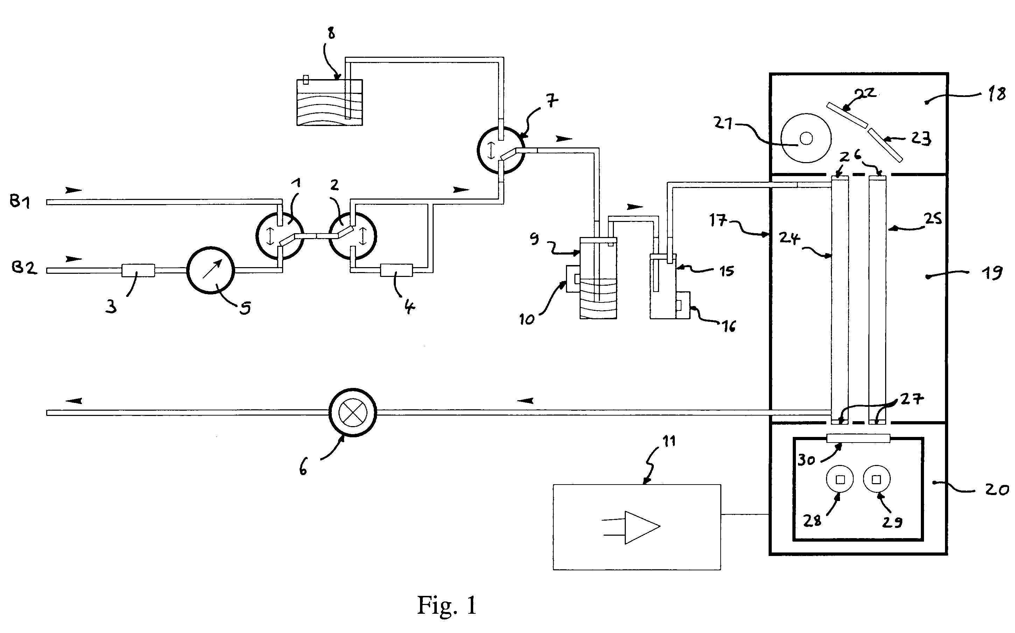

Sur la figure 1, le sens de circulation du gaz vecteur est schématisé par les flèches. Le circuit gazeux comporte donc deux branches d'entrée (B1, B2) en parallèle, partageant par commutation deux électrovannes (1, 2) selon des modalités que l'on verra plus en détail ci-après.

La branche (B1) est utilisée pour acheminer l'échantillon gazeux à mesurer, alors que la branche (B2) véhicule l'air purifié servant soit à purger le circuit, soit à véhiculer les atomes de mercure extraits d'un liquide. Le gaz circule toujours en circuit ouvert.

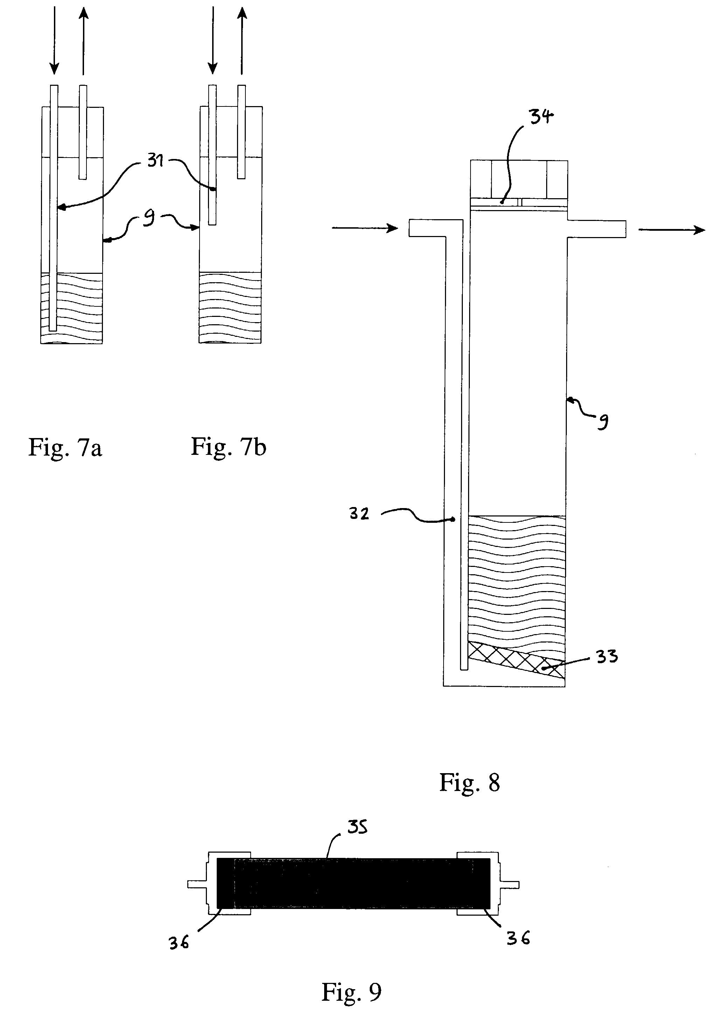

La branche (B2) comporte deux filtres à charbon actif (3, 4) montrés de manière détaillée en figure 9, qui fixent le mercure (et d'autres éléments présents dans l'air cependant sans incidence sur le procédé décrit et par conséquent non mentionnés) et purifient par conséquent le flux d'air en aval de cette partie du circuit.

La branche (B2) comporte également un débitmètre (5) indiquant le débit d'air de la pompe (6). Celui-ci peut être électronique ou analogique à bille. Toutefois, un débitmètre électronique présente l'avantage d'être reliable à l'unité centrale électronique, qui peut traiter en temps réel ses informations.

En sortie de la double branche (B1, B2), une troisième électrovanne (7) assure une commutation entre l'entrée du circuit (B1 ou B2) et un réservoir (8) rempli d'eau, nécessaire à la mise à niveau du flacon laveur (9).

Lorsque le détecteur (10) indique à l'unité de traitement électronique (11) que le niveau de l'eau dans le flacon laveur n'est pas suffisant, ladite unité (11) envoie un signal de commutation à l'adresse de l'électrovanne (7) qui commute et relie le réservoir (8) au flacon laveur (9). Dès que le niveau requis est atteint, un nouveau signal de commutation, provoqué par un changement d'état du détecteur (10), est émis par l'unité centrale (11). Le remplissage s'arrête.

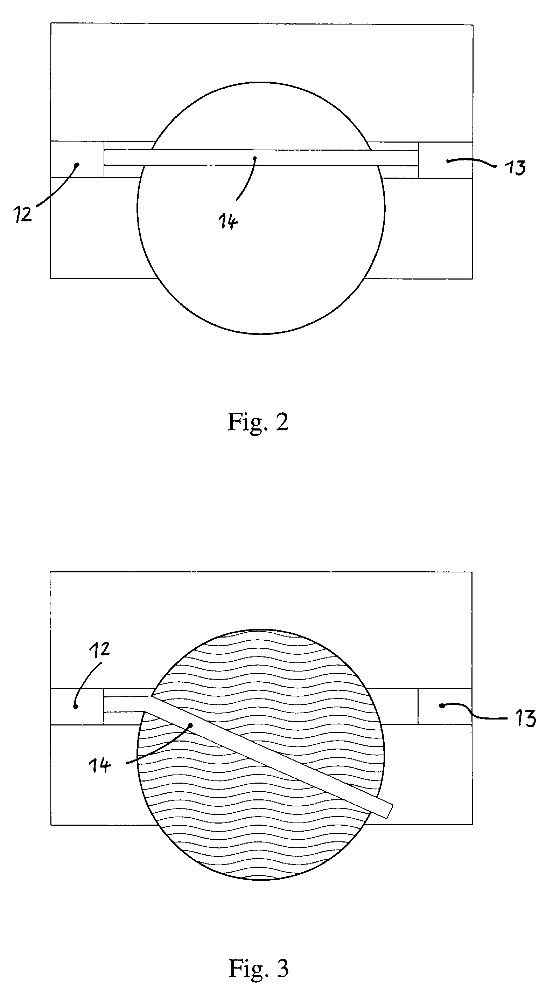

Ce détecteur (10) est de préférence basé sur une technologie optique, dont le principe apparaît en figures 2 et 3. Il se compose d'une diode émettrice (12) et d'une photodiode réceptrice (13). Le faisceau (14) émis par la première est focalisée sur la photodiode en l'absence de liquide, comme cela est montré en figure 2.

Dès l'apparition de liquide, comme en figure 3, la diffraction due audit liquide provoque un changement de direction du rayon lumineux (14) qui n'est plus dirigé vers la photodiode (13), laquelle change d'état électronique. Les photodiodes réceptrices (13) émettent par conséquent à l'adresse de l'unité centrale des signaux d'allure binaire aisément interprétable par celle-ci.

Le même principe est utilisé pour le flacon de garde (15), muni d'un détecteur (16). Si des gouttes de liquide s'échappent du flacon laveur (9), elles sont inévitablement piégées dans le flacon de garde (15).

Si le niveau de liquide dans ce dernier atteint la côte fixée par le détecteur (16), le signal envoyé par celui-ci à l'unité de traitement (11) a pour effet de provoquer l'émission d'un signal arrêtant la pompe (6).

Le compartiment fermé (17) fait office de chambre noire de mesure. Il est subdivisé en trois parties :
- un compartiment lampe (18) ;
- un compartiment cellules (19) ;
- un compartiment détecteurs (20).

Le premier cité comporte une lampe à vapeur de mercure (21) basse pression dont les caractéristiques sont :
- 90% de la radiation lumineuse se situe à 253,7 nm (raie d'absorption du mercure),
- bonne stabilité de l'intensité lumineuse,
- fonctionnement en 12 V, puissance inférieure à 10 W,
- faible encombrement.

La lampe émet sa lumière UV notamment vers deux miroirs (22, 23) identiques, qui réfléchissent également de manière identique le rayonnement vers les cellules du compartiment suivant (19). Ils sont de préférence constitués de métal chromé.

Le compartiment (19) doté de cellules comporte la cellule de mesure (24), de préférence en matériau connu sous la marque Pyrex, comprenant une entrée et une sortie du gaz à analyser. Les deux extrémités du tube sont bouchées par des fenêtres en quartz (26, 27). L'ensemble est fixé sur deux pièces spécialement conçues pour maintenir la cellule.

La condensation sur les parois de la cellule de mesure (24) est évitée au moyen d'un dispositif de chauffage chauffant uniformément ladite paroi (non représenté). Comme on l'a vu auparavant, ce moyen de chauffage peut être constitué d'un fil résistif ou d'un polymère chauffant enrobant la cellule (24). L'alimentation se fait en basse tension réglable. Un capteur renseignant le microprocesseur (non représenté) permet de contrôler à tout moment la chaleur de la cellule (24).

La cellule de référence (25), placée dans les mêmes conditions, est réalisée dans le même matériau que la cellule de mesure (24), et comporte le cas échéant également deux fenêtres en quartz (26, 27) collées aux deux extrémités, notamment lorsque le milieu est fortement pollué en mercure. Le gaz interne est alors constitué d'azote ou d'air sec.

Le compartiment suivant (20) comporte deux photodiodes identiques (28, 29), disposées derrière un filtre (30), dans le sens défini par le rayon lumineux UV. Ce filtre optique (30), de type interférentiel, a une surface traitée au laser pour ne laisser passer que la longueur d'onde de 253,7 nm spécifique au mercure, sur une bande passante de 10 nm. Toutes les autres longueurs d'onde sont fortement atténuées.

Les photodiodes (28, 29) permettent la mesure de la concentration en mercure du gaz se trouvant dans la cellule de mesure, par lecture simultanée des intensités lumineuses en sortie des deux cellules. Dans la cellule de référence (25), le taux de mercure est nul, mais la lecture comparative permet de s'affranchir de toute variation de luminosité de la lampe (21). Le fait de normer la luminosité à une valeur constante conduit à une amélioration de la stabilité de l'appareil et permet de minimiser la fréquence d'etalonnage de l'appareil (quelques étalonnages par an).

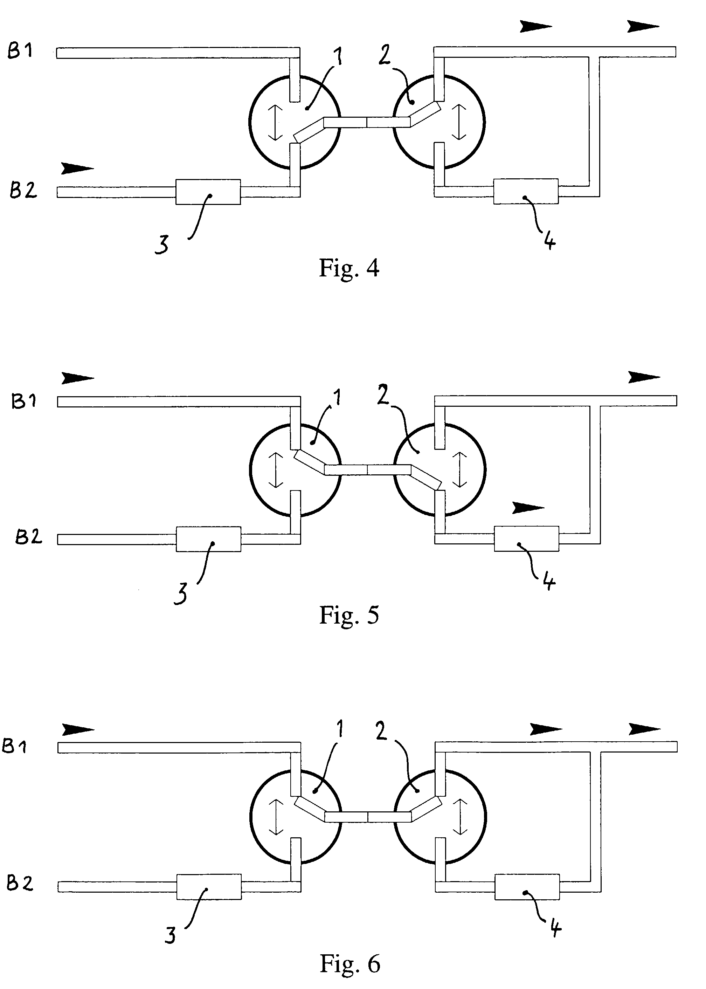

Les figures 4 à 6 montrent la séquence de commutation utilisée pour réaliser une mesure de mercure dans l'air. Dans ce cas, l'air est à la fois le gaz vecteur et l'échantillon de mesure. La figure 4 montre la position que l'on peut considérer comme étant la position de repos. Le circuit de mesure est purgé de toute trace de mercure par le flux d'air filtré par le charbon actif (3).

Lorsque la mesure est lancée, les électrovannes (1, 2) basculent (voir figure 5). Le gaz aspiré par la pompe (6) provient alors de la branche (B1). Cette phase permet de préaspirer l'échantillon gazeux dans le circuit et de supprimer l'effet de volume mort dans le tube de prélèvement, tout en poursuivant la filtration du mercure par le charbon actif (4).

Quelques secondes après le début de cette phase, l'électrovanne (2) bascule à nouveau, et court-circuite le charbon actif (4). Le taux de mercure dans l'échantillon à analyser peut à présent être mesuré (figure 6). Après un certain temps, l'électrovanne (1) rebascule : la mesure est terminée.

Lorsque le mercure est à mesurer dans un échantillon en phase liquide, les électrovannes (1, 2) restent dans la position de la figure 4.

L'échantillon liquide est directement injecté dans le flacon laveur (9) contenant une solution réductrice acide au moyen d'une micropipette. Le mercure atomique est libéré par la solution réductrice et le flux d'air filtré par le charbon actif (3) transporte ledit mercure atomique vers la cellule de mesure (24).

Dans les deux cas, le circuit électronique (11) gère non seulement des signaux d'entrée/sortie indiquant l'état des composants du circuit, mais opère des calculs lui permettant d'obtenir le résultat final. Lors d'une mesure du mercure dans l'air, la longueur de la période de basculement des électrovannes (1, 2) permettant le passage de l'air porteur du mercure permet le calcul, connaissant le débit, du volume de l'échantillon à analyser.

En sortie des photodiodes, l'amplitude et la forme du signal permettent le calcul du taux de mercure dans l'échantillon.

Tous les réglages sont numériques, modifiables à l'aide du logiciel de commande, et s'appliquent :
- au débit de la pompe,
- au niveau de luminosité de la lampe,
- à la température des cellules de verre, et
- au temps de commutation des électrovannes.

L'unité électronique (11) mesure les grandeurs suivantes :
- le débit de gaz,
- le signal de la photodiode de mesure,
- le signal de la photodiode de référence,
- la température de la cellule de mesure, et
- la température de l'air.

Cette unité (11) dispose également d'une sortie analogique lui permettant d'être connectée à un traceur.

Les figures 7a, 7b et 8 représentent trois types de flacon laveur (9), utilisés respectivement pour une mesure du mercure en phase gazeuse (dans l'air) et en phase liquide.

Les flacons (9) des figures 7a et 7b n'appellent pas de commentaires particuliers, sinon que la buse (31) peut, en variante présentée en figure 7b, n'être pas immergée dans le liquide (l'eau), ce qui homogénéise l'humidification. Dans ce cas, on sera conduit à lui adjoindre deux détecteurs de niveau, comme cela a été expliqué auparavant. Le flacon de garde est alors sans intérêt, et supprimé.

Le flacon laveur (9) de la figure 8 montre l'arrivée de gaz (32) disposée en partie inférieure et à l'extérieur du flacon (9), le filtre en verre fritté (33) se trouvant dans ce cas "obstruer" l'accès au liquide, et permettant une répartition plus uniforme du gaz.

Le liquide, injecté via une seringue au travers du septum (34), a tendance à descendre, et est repoussé par le flux gazeux vers le volume situé au-dessus du filtre (33), d'où une meilleure homogénéisation du mélange liquide/gaz, et une optimisation du transfert de mercure de l'un à l'autre.

La figure 9 montre de façon plus détaillée la constitution d'un filtre à charbon actif connu en soi : le charbon, disposé sous forme de granules dans la zone (35), est limité de part et d'autre par des filtres en papier (36).

La description ci-dessus s'applique à un exemple préférentiel de l'invention qui ne peut pas être considéré comme limitatif de celle-ci. Les variantes entrant dans le cadre des revendications annexées font également partie de l'invention.

## Revendications

1. Appareil analyseur de mercure fonctionnant par absorption atomique en vapeur froide, et comportant à cet effet un circuit parcouru par un gaz vecteur, qui peut être, en phase de mesure, soit directement chargé d'atomes de mercure d'un échantillon gazeux, soit acheminé à travers un élément (9) dudit circuit comportant l'échantillon à mesurer, dans lequel s'effectue le transfert des atomes de mercure du milieu original vers ledit gaz vecteur, lequel est ensuite dirigé vers une cellule de mesure (24) incluse dans un dispositif de mesure faisant office de chambre noire (17) dotée d'un émetteur de lumière (21) à vapeur de mercure envoyant un faisceau lumineux dans ladite cellule (24), et d'un organe de mesure (28) convertissant le signal lumineux issu de la cellule (24) en un signal électrique traité par une unité de traitement électronique (11),
caractérisé en ce que le dispositif de mesure (17) comprend une seconde cellule de référence (25) de configuration identique à la cellule de mesure (24), non parcourue par le gaz vecteur, mais également placée sur le trajet d'un faisceau lumineux émis par l'émetteur de lumière (21) à vapeur de mercure, en sortie de laquelle se trouve un organe de mesure (29) identique à celui qui se trouve en sortie de la cellule de mesure (24), convertissant le signal lumineux issu de la cellule de référence (25) en un signal électrique traité par l'unité de traitement électronique (11) disposant ainsi d'un signal de référence.

2. Appareil analyseur de mercure fonctionnant par absorption atomique en vapeur froide selon la revendication 1, caractérisé en ce que le circuit parcouru par le gaz vecteur comprend deux branches (B1, B2) parallèles situées en amont d'un flacon laveur (9), l'une des branches (B1) étant destinée au passage de l'échantillon de gaz porteur de mercure à mesurer, l'autre branche (B2) étant prévue pour le passage de l'air filtré et dépourvu de mercure, et disposant à cet effet de moyens de filtrage (3, 4) du mercure, lesdites branches (B1, B2) partageant deux électrovannes (1, 2) en série pouvant commuter pour être reliées alternativement à l'une et à l'autre.

3. Appareil analyseur de mercure fonctionnant par absorption atomique en vapeur froide selon la revendication précédente, caractérisé en ce que la branche (B2) prévue pour véhiculer l'air dépourvu de mercure comporte, de part et d'autre des électrovannes (1, 2) en série, un charbon actif (3, 4) capable de fixer le mercure, opérant ainsi un filtrage du mercure.

4. Appareil analyseur de mercure fonctionnant par absorption atomique en vapeur froide selon l'une quelconque des revendications 1 à 3, caractérisé en ce que le flacon laveur (9) est situé en aval d'une électrovanne (7) permettant de commuter le circuit gazeux entre d'une part la sortie desdites branches (B1, B2) en parallèle, et d'autre part un réservoir à liquide (8) permettant d'alimenter le flacon laveur lorsque le niveau en liquide y baisse.

5. Appareil analyseur de mercure fonctionnant par absorption atomique en vapeur froide selon la revendication précédente, caractérisé en ce que le flacon laveur (9) comporte une entrée (32) immergée dans le liquide, donnant sur un filtre (33) en verre fritté s'ajustant dans le volume intérieur du flacon (9), uniformisant et accroissant le contact gaz/solution.

6. Appareil analyseur de mercure fonctionnant par absorption atomique en vapeur froide selon l'une quelconque des revendications 2 à 5, caractérisé en ce que, entre ledit flacon laveur (9) et l'entrée de la cellule de mesure (24), se trouve un flacon de garde (15) retenant tout liquide s'échappant du flacon laveur (9) en direction de ladite cellule de mesure (24).

7. Appareil analyseur de mercure fonctionnant par absorption atomique en vapeur froide selon l'une des revendications 5 et 6, caractérisé en ce que lesdits flacons (9, 15) sont équipés d'au moins un détecteur (10, 16) de niveau de liquide.

8. Appareil analyseur de mercure fonctionnant par absorption atomique en vapeur froide selon la revendication précédente, caractérisé en ce que le détecteur de niveau de liquide (10, 16) fonctionne selon un principe optique, au moyen d'une diode électroluminescente (12) envoyant un faisceau lumineux en direction d'une photodiode (13) lorsqu'il n'y a pas de liquide entre ces deux composants, le faisceau (14) étant dévié par diffraction lorsque le niveau de liquide atteint ou dépasse ledit faisceau (14), la photodiode (13) émettant à l'adresse de l'unité de traitement électronique (11) un signal d'allure binaire selon qu'elle reçoit ou non le faisceau lumineux (14).

9. Appareil analyseur de mercure fonctionnant par absorption atomique en vapeur froide selon l'une quelconque des revendications précédentes, caractérisé en ce que le circuit parcouru par le gaz comporte une pompe (6) et un débitmètre (5), ladite pompe (6) étant située en sortie du circuit.

10. Appareil analyseur de mercure fonctionnant par absorption atomique en vapeur froide selon l'une quelconque des revendications précédentes, caractérisé en ce que les cellules de mesure (24) et de référence (25) reçoivent les faisceaux lumineux UV émis par une lampe (21) à vapeur de mercure via deux miroirs (22, 23) réfléchissant de façon identique la lumière UV émise par ladite lampe (21).

11. Appareil analyseur de mercure fonctionnant par absorption atomique en vapeur froide selon l'une quelconque des revendications précédentes, caractérisé en ce qu'un filtre UV (30) est placé entre la sortie des cellules (24, 25) et les organes de mesure (28, 29).

12. Appareil analyseur de mercure fonctionnant par absorption atomique en vapeur froide selon la revendication précédente, caractérisé en ce que le filtre UV (30) est de type interférentiel, et laisse passer les longueurs d'onde centrées sur 253,7 nm, sur une bande passante de 10 nm.

13. Appareil analyseur de mercure fonctionnant par absorption atomique en vapeur froide selon l'une quelconque des revendications précédentes, caractérisé en ce que les organes de mesure (28, 29) sont des photodiodes en silicium fonctionnant optimalement pour des rayons lumineux UV.

14. Appareil analyseur de mercure fonctionnant par absorption atomique en vapeur froide selon l'une quelconque des revendications précédentes, caractérisé en ce que la surface périphérique de la cellule de mesure (24) est uniformément chauffée pour éviter toute condensation de vapeur d'eau sur sa paroi.

15. Appareil analyseur de mercure fonctionnant par absorption atomique en vapeur froide selon la revendication précédente, caractérisé en ce que le chauffage de la cellule de mesure (24) est réalisé par un fil résistif enroulé autour de la cellule et alimenté en basse tension réglable.

16. Appareil analyseur de mercure fonctionnant par absorption atomique en vapeur froide selon la revendication 14, caractérisé en ce que le chauffage de la cellule de mesure (24) est réalisé à l'aide d'un polymère conducteur appliqué sur la surface externe de ladite cellule, alimenté en basse tension réglable.

17. Appareil analyseur de mercure fonctionnant par absorption atomique en vapeur froide selon l'une des revendications 15 et 16, caractérisé en ce que la cellule de mesure (24) est munie d'un capteur de température mesurant la température de ladite cellule et en permettant la régulation par asservissement de l'alimentation basse tension au signal du capteur, via l'unité de traitement électronique (11).

18. Appareil analyseur de mercure fonctionnant par absorption atomique en vapeur froide selon l'une quelconque des revendications précédentes, caractérisé en ce que le gaz contenu dans la cellule de référence (25) est de l'air sec ou de l'azote.

19. Appareil analyseur de mercure fonctionnant par absorption atomique en vapeur froide selon l'une quelconque des revendications précédentes, caractérisé en ce qu'il comporte un étage électronique de numérisation des signaux issus des photodiodes (28, 29) situé à proximité desdites photodiodes (28, 29), les signaux numérisés étant ensuite traités par l'unité de traitement électronique (11).

20. Appareil analyseur de mercure fonctionnant par absorption atomique en vapeur froide selon l'une quelconque des revendications précédentes, caractérisé en ce que l'unité de traitement électronique (11) basé sur un microprocesseur comporte un port de sortie permettant une liaison avec un micro-ordinateur doté d'un logiciel d'exploitation des mesures de l'analyseur de mercure.

21. Appareil analyseur de mercure fonctionnant par absorption atomique en vapeur froide selon l'une quelconque des revendications précédentes, caractérisé en ce que l'unité de traitement électronique (11) est un micro-ordinateur intégré dans l'appareil, comportant les périphériques usuels d'utilisation.

22. Appareil analyseur de mercure fonctionnant par absorption atomique en vapeur froide selon l'une quelconque des revendications précédentes, caractérisé en ce qu'il comporte une batterie d'alimentation le rendant autonome.
